# DEMANDE DE BREVET EUROPEEN

(11) **EP 1 808 322 A1**
(43) Date de publication de la demande: **18.07.2007**
(21) Numéro de dépôt: 07100124.2
(22) Date de dépôt: 04.01.2007
(51) Int. Cl.: B60J 10/00, B60J 10/02

(54) **Elément d'étanchéité pour pare-brise de véhicule automobile.**

(30) Priorité: 17.01.2006 FR 0650161
(71) Demandeur: Peugeot Citroen Automobiles SA, 78943 Vélizy-Villacoublay Cedex (FR)
(72) Inventeur: Aucourt, Jean-Jacques, 78370, PLAISIR (FR)

(57) **Abrégé**

L'invention concerne un véhicule automobile comportant un capot (10) de recouvrement d'un compartiment moteur, un pare-brise (20), une traverse (30) inférieure de pare-brise, et une grille (40) d'auvent liée au pare-brise par l'intermédiaire d'un élément d'étanchéité (50).

Le véhicule se caractérise en ce qu'un élément (53) faisant entretoise est disposé entre le pare-brise (20) et l'élément d'étanchéité (50) de sorte à créer un palier (21) entre l'élément d'étanchéité (50) et une face externe (20b) du pare-brise

## Description

L'invention se rapporte à un véhicule automobile comportant un élément d'étanchéité pour pare-brise.

L'invention concerne plus particulièrement un véhicule automobile comportant un capot de recouvrement d'un compartiment moteur, un pare-brise, une traverse inférieure de pare-brise, et une grille d'auvent liée au pare-brise par l'intermédiaire d'un élément d'étanchéité.

On connaît l'ajout d'un cordon de matière collante entre le pare-brise et la traverse inférieure située au droit de la partie inférieure du pare-brise. En effet, il est fait traditionnellement recours à un tel cordon pour maintenir fixer à demeure le pare-brise sur la structure du véhicule composée notamment de la traverse inférieure de pare-brise qui s'étend de manière sensiblement transversale au véhicule.

On connaît aussi, du document EP-B1-0331644, une gouttière transversale d'auvent qui est fermée par un couvercle amovible, aussi qualifié de grilles d'auvent, comportant des fentes d'aération et un trou pour le passage d'un arbre d'entraînement d'essuie-glace.

Afin de rendre moins agressif la partie avant du véhicule lors d'un choc avec un piéton, il est connu de réduire les zones de rigidité du véhicule. Pour cela, il est connu de rendre déformable le capot de recouvrement du compartiment moteur ou le pare-brise du véhicule.

La demanderesse a constaté que la partie avant du véhicule reste trop agressive envers la tête d'un piéton, d'autant plus s'il s'agit d'un enfant. En effet, la zone identifiable par la grille d'auvent est sujette à blesser la tête d'un piéton de la taille d'un enfant lors d'un choc frontal. Le passage d'au moins un arbre d'entraînement des essuie-glaces au travers d'une ouverture ménagée sur la grille d'auvent confère à la grille d'auvent une trop grande rigidité. Compte tenu de l'assemblage de la grille d'auvent sur l'élément d'étanchéité, la demanderesse a constaté que chacune de ces pièces est trop rigide.

La demanderesse a aussi constaté que lors du montage du pare-brise sur la traverse inférieure, une pression est exercée sur le cordon de matière collante de sorte que ce dernier est parfois rendu visible de l'extérieure du véhicule. De plus, il a été relevé que l'écart entre le pare-brise est la traverse inférieure n'est pas conforme aux préconisations de montage de sorte à créer un défaut d'assemblage entre ces pièces.

Un but de la présente invention est de pallier tout ou partie des inconvénients de l'art antérieur relevés ci-dessus.

La présente invention a trait à un véhicule automobile comportant un capot de recouvrement d'un compartiment moteur, un pare-brise, une traverse inférieure de pare-brise, et une grille d'auvent liée au pare-brise par l'intermédiaire d'un élément d'étanchéité.

A cette fin, le véhicule selon l'invention, par ailleurs conforme à la définition générique qu'en donne le préambule ci-dessus, est essentiellement caractérisé en ce qu'un élément faisant entretoise est disposé entre le pare-brise et l'élément d'étanchéité de sorte à créer un palier entre l'élément d'étanchéité et une face externe du pare-brise.

Par ailleurs, le véhicule de l'invention peut comporter l'une ou plusieurs des caractéristiques suivantes :
- l'élément faisant entretoise est agencé entre une face intérieure du pare-brise et une partie de l'élément d'étanchéité,
- l'élément d'étanchéité comprend un corps s'étendant de manière sensiblement parallèle au pare-brise, une extrémité du corps comprend un moyen de crochetage d'au moins une patte de la grille d'auvent et un joint d'étanchéité destiné à être disposé entre la grille d'auvent et un bord inférieur du pare-brise,
- l'élément d'étanchéité comprend une cloison s'étendant de manière sensiblement perpendiculaire au corps de sorte à créer une butée au déplacement d'un cordon de matière collante lorsque le pare-brise est mis en pression contre la traverse,
- l'élément faisant entretoise est un ruban de mousse réalisé en matière plastique, ledit ruban présentant deux faces et comprenant un revêtement collant disposé sur au moins l'une de ces faces,
- l'élément d'étanchéité comprend au moins une âme métallique de liaison de la cloison, du corps et dudit moyen d'accrochage,
- le palier entre l'élément d'étanchéité et une face externe du pare-brise est compris entre 0,1 mm et 5 mm, de préférence de l'ordre de 0,5 mm.

D'autres particularités et avantages apparaîtront à la lecture de la description ci-après faite en référence aux figures dans lesquelles :
- la Fig. 1 représente de manière schématique une vue en perspective partielle d'une partie avant d'un véhicule automobile, conforme à l'invention,
- la Fig. 2 est un agrandissement d'une vue en coupe longitudinale selon l'axe A-A de la Fig. 1.

Dans la description qui suit, les orientations utilisées sont les orientations habituelles d'un véhicule automobile et les termes "avant" et "arrière" s'entendent par rapport au sens de la marche normale du véhicule automobile.

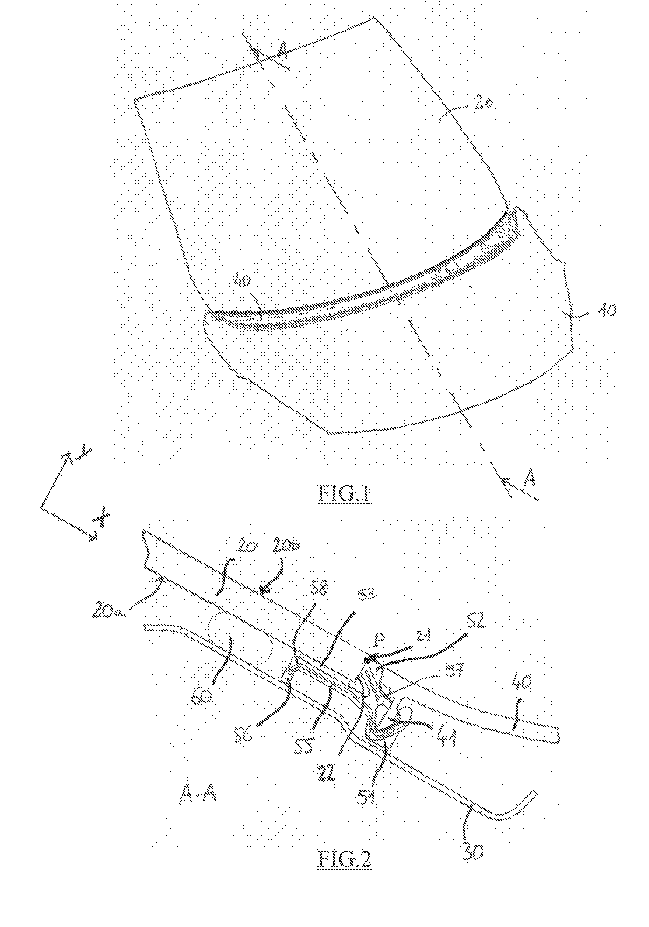

Sur la Fig. 1, on a représenté schématiquement et partiellement une structure avant d'un véhicule automobile. Dans un soucis de clarté, seuls un capot 10 de recouvrement d'un compartiment moteur, un pare-brise 20 et une grille 40 d'auvent ont été représentés.

De manière classique, la structure avant comprend, notamment, de l'avant vers l'arrière du véhicule, un capot 10 de recouvrement d'un compartiment moteur, une grille 40 d'auvent et un pare-brise 20.

Dans le prolongement du pare-brise 20 et du capot 10 se trouve donc située la grille d'auvent 40.

Le pare-brise 20, dont une partie inférieure est agrandie en Fig. 2, comprend de manière traditionnelle une face interne 20a, une face externe 20b et au moins un flanc périphérique 22 qui est de préférence constitué des bords latéraux gauche et droit, et des bords supérieur et inférieur.

Pour ne pas permettre à la tête d'un piéton de venir en appui contre la grille d'auvent 40 lors d'un choc, la grille d'auvent est positionnée légèrement en retrait selon Y par rapport au pare-brise 20 de sorte que la tête du piéton ne puisse pas venir en appui contre la grille d'auvent ou un élément d'étanchéité 50 maintenant la grille 40 sur le pare-brise 20, mais plutôt contre le pare-brise 20 ou le capot 10, voire le pare-brise et le capot.

Pour cela, la grille d'auvent 40 est liée au pare-brise 20 par l'intermédiaire d'un élément d'étanchéité 50 qui comprend au moins un moyen de crochetage 51. La grille d'auvent 40 comprend de préférence au moins une patte 41 de forme sensiblement complémentaire à celle dudit moyen de crochetage 51. La patte 41 fait saillie hors de la grille, de manière sensiblement perpendiculaire, et est destinée à coopérer avec ledit moyen de crochetage 51. La patte 41 est réalisée d'un seul tenant avec la grille 40, par le biais, par exemple, d'une opération de moulage d'une matière plastique.

L'élément d'étanchéité 50 comprend, outre ledit moyen de crochetage 51, un corps 55 dans le prolongement duquel sont ménagés d'un côté ledit moyen de crochetage 51 et un joint d'étanchéité 52, d'un côté opposé une cloison 56.

Tout ou partie dudit joint d'étanchéité 52 est de préférence en appui contre le bord inférieur 22 du pare-brise selon un point de contact P, et contre une extrémité arrière de la grille d'auvent 40. Il est ainsi créé un affleurement nulle entre le joint 52 et le pare-brise 20, c'est-à-dire une différence de valeurs entre les côtes en Y de la surface extérieure 20b du pare-brise et du point de contact P du joint 52 sur le pare-brise 20.

Un élément métallique de rigidification est de préférence disposé au niveau du joint d'étanchéité 52. Cet élément de rigidification 57 assure un positionnement correct du joint entre le pare-brise et la grille d'auvent. Etant donné que tout ou partie du joint d'étanchéité 52 est rendu visible de l'extérieur du véhicule, le recours à un tel élément de rigidification 57 est rendu nécessaire pour ne pas altérer l'aspect esthétique de l'ensemble. Pour cela, l'élément de rigidification assure l'absence de jeu de montage en X entre le joint d'étanchéité 52 et le pare-brise 20.

En ce qui concerne le corps 55 de l'élément d'étanchéité 50, il comprend une face située en regard de la face interne 20a du pare-brise, et sur laquelle est disposé un élément faisant entretoise 53. Ainsi, lorsque l'élément d'étanchéité 50 est disposé sur le pare-brise 20, l'élément faisant entretoise 53 est monté entre le pare-brise et la traverse inférieure 30.

Un tel agencement de l'élément faisant entretoise 53 entre le pare-brise 20 et l'élément d'étanchéité 50 permet, de manière simple et peu coûteuse, de déplacer le joint d'étanchéité 52 sous le pare-brise. Le point de contact P est ainsi amené au niveau du bord inférieur 22 du pare-brise, créant de la sorte une rupture d'affleurement entre le joint 52 et le pare-brise 20, c'est-à-dire un palier 21 dont la valeur est la différence de côte en Y entre celle de la face externe 20b du pare-brise et celle du point de contact P entre le joint 52 et le bord inférieur 22 du pare-brise.

L'entretoise 53 est de préférence de forme linéaire et de section sensiblement rectangulaire, de sorte à s'étendre le long de tout ou partie de l'élément d'étanchéité 50, contre le corps 55.

De préférence, l'entretoise 53 comprend au moins sur l'une de ses faces en appui contre le pare-brise 20 ou contre l'élément d'étanchéité 50, un revêtement collant qui assure le maintien de l'élément d'étanchéité 50 sur le pare-brise 20.

L'élément faisant entretoise 53 est soit rapporté sur le corps 55 de l'élément d'étanchéité, soit confondu avec le corps 55 de sorte que l'entretoise 53 et l'élément d'étanchéité 50 forment une pièce monobloc, réalisée d'un seul tenant.

L'épaisseur de l'élément 53 confère avantageusement un positionnement du joint d'étanchéité contre le bord inférieure 22 de sorte qu'en changeant d'entretoise 53, il est possible de faire varier la dimension en Y du palier 21, voire d'utiliser le même élément d'étanchéité 50 sur différents pare-brises, dont l'épaisseur varie.

Un tel agencement est remarquable en ce qu'il permet de créer un palier 21 entre le joint 52 et le pare-brise 20. En effet, le fait de disposer ainsi en retrait le joint 52 sur le pare-brise et par conséquent la partie arrière de la grille d'auvent 40 sur lequel elle est montée, assure qu'en cas de choc avec un piéton, la tête de ce dernier ne puisse pas heurter ni la grille d'auvent 40, ni tout ou partie de l'élément d'étanchéité 50, mais soit le pare-brise 20, soit le capot 10 de recouvrement du compartiment moteur, c'est-à-dire une zone considérée comme moins agressive pour la tête d'un piéton en cas de choc frontal avec le véhicule.

Le palier 21 a une dimension en Y comprise en 0,1 et 5 mm, de préférence 0,5 mm. L'épaisseur de l'entretoise 53 est ainsi calibrée pour obtenir une telle dimension en Y du palier 21. Selon l'épaisseur du pare-brise, laquelle varie selon le type de véhicule, il est rendu possible d'obtenir une telle dimension en Y du palier 21 tout en gardant un même élément d'étanchéité 50, mais en modifiant l'épaisseur de l'entretoise 53.

En ce qui concerne ladite cloison 56 de l'élément d'étanchéité 50, cette dernière s'étend au niveau de l'extrémité libre du corps 55, de préférence de manière sensiblement perpendiculaire au corps 55. Ainsi, le corps 55 et la cloison 56 réalisés en un seul tenant, définissent un L pour lequel tandis que la grande barre est équivalente au corps 55, la petite barre est équivalente à la cloison 56.

De préférence, l'extrémité libre de la cloison 56 est destinée à venir en appui contre la traverse 30 de sorte à créer, lors du montage, une butée au déplacement en -Y du pare-brise 20 vers la traverse 30. La longueur de la cloison 56, c'est-à-dire la longueur de la petite barre du L, associée à l'épaisseur de l'entretoise 53 définissent un écart en Y entre le pare-brise 20 et la traverse 30. Cet écart assure le positionnement correct en Y du pare-brise 20 sur la traverse 30.

Un cordon de matière collante, désigné dans son ensemble par la référence 60, assure le maintien du pare-brise 20 sur la traverse inférieure 30. La cloison 56 permet avantageusement d'éviter l'écrasement du cordon de matière collante 60 disposé en tout ou partie de la périphérie de la face intérieure 20a du pare-brise.

La cloison 56 assure également une butée en X au déplacement du cordon de matière collante 60 lorsque le pare-brise 20 est positionné sur la traverse 30. L'échappement du cordon 60 au-delà de la partie inférieure du pare-brise 20, c'est-à-dire sous la grille d'auvent, lors de la mise en position du pare-brise sur la traverse est ainsi évité.

Pour donner une rigidité à l'élément d'étanchéité 50, une âme métallique 58 s'étend de la cloison 56 jusqu'à une extrémité dudit moyen de crochetage, en passant par le corps 55. Cette âme métallique, réalisée de préférence en acier, confère une rigidité à l'élément d'étanchéité 50. Néanmoins, cette âme métallique 58 permet une déformabilité de la cloison 56 de sorte que lors d'un choc entre la tête d'un piéton et le pare-brise, l'effort lié à ce choc est en partie absorbé par la cloison 56 et/ou le cordon 60. Cette âme métallique 58 permet aussi à la cloison 56 de transmettre une partie des efforts liés à ce choc du pare-brise à la structure du véhicule.

## Revendications

1. Véhicule automobile comportant un capot (10) de recouvrement d'un compartiment moteur, un pare-brise (20), une traverse (30) inférieure de pare-brise, et une grille (40) d'auvent liée au pare-brise par l'intermédiaire d'un élément d'étanchéité (50), **caractérisé en ce qu'**un élément (53) faisant entretoise est disposé entre le pare-brise (20) et l'élément d'étanchéité (50) de sorte à créer un palier (21) entre l'élément d'étanchéité (50) et une face externe (20b) du pare-brise.

2. Véhicule automobile selon la revendication 1, **caractérisé en ce que** l'élément faisant entretoise (53) est agencé entre une face intérieure (20a) du pare-brise (20) et une partie de l'élément d'étanchéité (50).

3. Véhicule selon la revendication 2, **caractérisé en ce que** l'élément d'étanchéité (50) comprend un corps (55) s'étendant de manière sensiblement parallèle au pare-brise, une extrémité du corps (55) comprend un moyen de crochetage (51) d'au moins une patte (41) de la grille (40) d'auvent et un joint (52) d'étanchéité destiné à être disposé entre la grille (40) d'auvent et un bord inférieur (22) du pare-brise (20).

4. Véhicule selon la revendication 3, **caractérisé en ce que** l'élément d'étanchéité (50) comprend une cloison (56) s'étendant de manière sensiblement perpendiculaire au corps (55) de sorte à créer une butée au déplacement d'un cordon de matière collante (60) lorsque le pare-brise est mis en pression contre la traverse (30).

5. Véhicule selon la revendication 4, **caractérisé en ce que** l'élément faisant entretoise (53) est un ruban de mousse réalisé en matière plastique, ledit ruban présentant deux faces et comprenant un revêtement collant disposé sur au moins l'une de ces faces.

6. Véhicule selon la revendication 5, **caractérisé en ce que** l'élément d'étanchéité (50) comprend au moins un élément métallique (57, 58) de rigidification.

7. Véhicule selon la revendication 5, **caractérisé en ce que** l'élément d'étanchéité (50) comprend au moins une âme métallique (58) de liaison de la cloison (56), du corps (55) et dudit moyen d'accrochage (51).

8. Véhicule selon l'une quelconque des revendications 1 à 7, **caractérisé en ce que** le palier (21) entre l'élément d'étanchéité (50) et une face externe (20b) du pare-brise est compris entre 0,1 mm et 5 mm.

9. Véhicule selon la revendication 8, **caractérisé en ce que** le palier (21) entre l'élément d'étanchéité (50) et une face externe (20b) du pare-brise est de préférence de l'ordre de 0,5 mm.
